# EUROPEAN PATENT SPECIFICATION

(11) **EP 2 138 746 B1**
(45) Date of publication and mention of the grant of the patent: **13.01.2016**
(21) Application number: 08740126.1
(22) Date of filing: 09.04.2008
(51) Int. Cl.: F16J 15/12, F16J 15/38

(54) **GASKET**
DICHTUNG
JOINT D'ÉTANCHÉITÉ

(30) Priority: 18.04.2007 JP 2007109810
(43) Date of publication of application: 30.12.2009
(73) Proprietor: Eagle Industry Co., Ltd., Minato-ku Tokyo 105-8587 (JP)
(72) Inventor: NAKAHARA, Nobuo, Tokyo 105-8587 (JP)
(74) Representative: Isarpatent
(86) International application number: PCT/JP2008/057023
(87) International publication number: WO 2008/129950

(56) References cited:
- EP-A1- 1 248 028
- EP-A2- 0 004 336
- JP-A- 11 108 198
- JP-A- 2000 320 688
- JP-A- 2007 024 151
- JP-U- 04 058 672

## Description

### TECHNICAL FIELD

The present invention relates to a gasket used for preventing leakage of sealed fluid such as gas or liquid from a space between components, in, for example, a mechanical seal and the like. Particularly, this invention relates to a gasket having configuration wherein a cylindrical ring is covered by a rubber.

### BACKGROUND ART

In a compressor used for automotive air conditioning apparatus and the like, a sealing device such as a mechanical seal and the like is used for sealing refrigerant at an inside of a machine. Also, for preventing leakage of sealed gas from a space between components of the sealing device or a space between the sealing device and a sealing equipment portion of a compressor, a gasket is interposed therebetween. As a preferable constitutional example, it has been known a gasket having configuration wherein a circumference of a cylindrical ring is covered by a rubber as disclosed in Japanese Patent Laid Open No. 2007-24151 (referred as Patent Document 1).
Patent Document 1: Japanese Patent Laid Open No. 2007-24151

In the meantime, refrigerant used for an automotive air conditioning apparatus and the like has been changed from Freon R12(CF₂CL₂) to Freon R-134a which excludes chlorine (CI) which causes ozone depletion as part of depletion of ozone. However, after this, there has been a new problem that Freon greatly relates to a greenhouse effect which causes global warming even it is extremely small amount, because it absorbs long-wave (infrared ray) radiation. Therefore, in recent years, experiment for refrigerant instead of R134a in order to reduce such environmental burden, particularly, it has been considered to switch Freon gas (R-134a) to natural refrigerant such as carbon dioxide gas (CO₂) and the like.

EP Patent Publication No. 0004336 discloses a seal arrangement comprising a housing which forms a housing aperture, a rod which is moved in the housing aperture in the longitudinal direction or in a rotating manner, and an exchangeable seal ring which shuts the housing aperture between the rod and the housing and which is made of an elastomeric material and which, with an internal ring area, co-operates with the rod surface and which is held by a profiled part which projects outwardly from its profiled body and engages behind a housing collar the seal ring containing in a groove, which opens towards the front in the direction of the assembly side, a ring which extends backwardly as far as the cross-sectional zone of the radially projecting profiled part and which is made of a harder material, characterized in that the outwardly projecting profiled part is altogether displaced in the axial direction with respect to the ring area cooperating with the rod, and in that the radial clearance between this part and the rod is such that the seal ring does not at any point inside the collar or therebehind have a radial thickness which, after the deduction of the radial clearance between it and the rod and the radial width of the groove is larger than the distance of the collar from the rod and in that the radial clearance between the ring in a harder material which, after the assembly of the seal ring, is insertable into the groove which extends in a substantially axially parallel manner, and which acts as a supporting ring and the collar is so minimal in relation to the mutual radial overlapping of the collar and the profiled part, engaging therebehind that the radially projecting profiled part is prevented from carrying out an inwardly directed movement of detachment.

EP Patent Publication No. 1248028 discloses channels made in two parts and supported by an intermediate block that are put in communication by conduit passing through the block. These conduits form a housing for an insert coated with weather strips. The intermediate block comprises a watertight device positioned opposite one of the two parts, which is supported by the block, and a tubular insert. The insert weather strips are compressed between a shoulder made in the conduit and the other part supported by the block.

### DISCLOSURE OF INVENTION

### TECHNICAL PROBLEMS TO BE SOLVED BY THE INVENTION

However, when carbon dioxide gas (CO2) is used as refrigerant, an internal pressure of a compressor of an air conditioning apparatus becomes high pressure for example, it becomes 10 times in degree as compared from using Freon gas (R-134a), and its fluctuation range becomes larger. Then, in a sealing device of a compressor used in the condition like this, there is so-called foaming breakage at a rubber material when using a gasket wherein a circumferential cylindrical ring is covered by a rubber material. The foaming breakage of the rubber material at this time occurs at a boundary surface (a bonded part) of the cylindrical ring and the rubber material, particularly occurs concentrically at an edge portion of the cylindrical ring at an inside of a machine.

The present invention is made by considering these problems, a purpose of the invention is to provide a gasket which is available to seal sealed fluid appropriately without foaming breakage of a rubber material even in a high pressure environment with significant pressure variation such as a compressor employing carbon dioxide gas (CO₂) as refrigerant.

### MEANS FOR SOLVING THE TECHNICAL PROBLEMS

An invention of the present invention, as a result of intense study of analyzing foaming breakage occurs at a boundary face of a cylindrical ring and a rubber material, and has found that the foaming breakage occurs by a cause as follows. Namely, a gas as sealed fluid penetrates to a rubber material, however, when a machine inside becomes high pressure, the gas penetrates the robber material, and the penetrated gas exits to the inside of the machine (or exits to environment side) when an inside pressure of the machine depressed relatively by variation of the pressure. On the other hand, the gas penetrates to the rubber material has a property that it becomes stable easily at the boundary face of the cylindrical ring (a cylindrical ring surface), the gas exists on the surface of the cylindrical ring can be expanded by small energy with respect to an internal of the rubber material. Thus, in compressor wherein carbonate dioxide gas (CO₂) is used, since an inside pressure of a machine becomes extremely high pressure and pressure variation becomes larger as compared from using Freon, the gas expands largely before penetrating from the rubber material and the rubber material reaches the foaming breakage.

Further, the foaming breakage is confirmed at an inboard end portion of the cylindrical ring (corner portion of the edge) is due to that bonding between the cylindrical ring and the rubber material being relatively weak since adhesive agent is difficult to interpose between a space of the cylindrical ring and the rubber material at the edge portion of the cylindrical ring, as a result, non-uniformity arises at somewhere of the bonding portion of the cylindrical ring and the rubber material, the load can be concentrated easily at a portion where the bonding force is weak, thus foaming breakage can easily be occurred at the edge portion.

Therefore, the gasket of the present invention comprises a cylindrical metal ring, and a rubber layer which covers an inner circumferential face, an outer circumferential face and at least one end portion of said cylindrical metal ring continuously, wherein an angular portion of said end portion of said cylindrical metal ring covered by said rubber material is subjected to round chamfering (R-chamfering) so that a round radius "R" of a curved surface becomes R=0.1 mm or more.

According to a gasket having such constitution, a corner portion (edge) does not exist at an end portion of the cylindrical metal ring substantially, since the end portion of the cylindrical metal ring is formed as a curved surface with a radius more than a predetermined length. Therefore, foaming breakage of the rubber material that frequently occurred at the edge portion can be prevented. Further, bondage forces of the cylindrical metal ring and the rubber material becomes about equal at whole area covered by the rubber material. As a result, in a high pressure environment with significant pressure variation such as a compressor employing carbon dioxide gas (CO₂) as refrigerant, it is possible to provide a gasket available to seal sealed fluid appropriately without foaming breakage of the rubber material.

Preferably, a gasket of the present invention comprises a cylindrical metal ring, and a rubber layer covering its inner and outer circumferential surfaces and at least one end portion continuously, wherein an angular portion of said end portion of said cylindrical metal ring covered by said rubber material is subjected to corner chamfering (C-chamfering) so that a width of chamfer is 0.1 mm or more and a width of an end face is 0.06 mm or more.

According to the gasket having such the constitution, because the end portion of the metal ring is subjected to C-chamfering with the chamfering width a predetermined length or more as well as the end portion of the metal ring was formed so that a width of an end face rest of the metal ring end portion more than predetermined length, there is no corner portion (edge) substantially at the end portion of the metal ring. Therefore, foaming breakage of the rubber material that frequently occurred at the edge portion can be prevented. Further, bondage forces of the cylindrical metal ring and the rubber material becomes about equal at whole area covered by the rubber material. As a result, in a high pressure environment with significant pressure variation such as a compressor employing carbon dioxide gas (CO₂) as refrigerant, it is possible to provide a gasket available to seal sealed fluid appropriately without foaming breakage of the rubber material.

Also, preferably, a thickness of the rubber layer of the gasket of the present invention is 0.7 mm or less.

According to the gasket having such constitution, since a thickness of the rubber material (rubber layer) is formed as thin significantly, gas penetrated into the rubber material exits from the rubber material immediately when an inboard side becomes low pressure. Thus, it is possible to reduce possibility of causing rubber material cracking by foaming the penetrate gas in the rubber member.

### BRIEF DESCRIPTION OF DRAWINGS

[Fig. 1]

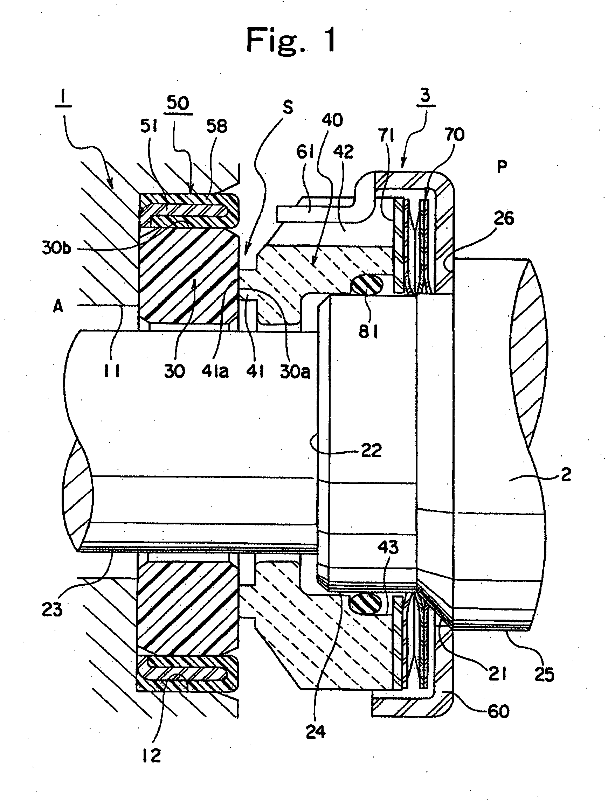

   Fig. 1 I a schematic cross sectional view showing a structure of a sealing device with one embodiment of the present invention.
[Fig. 2]

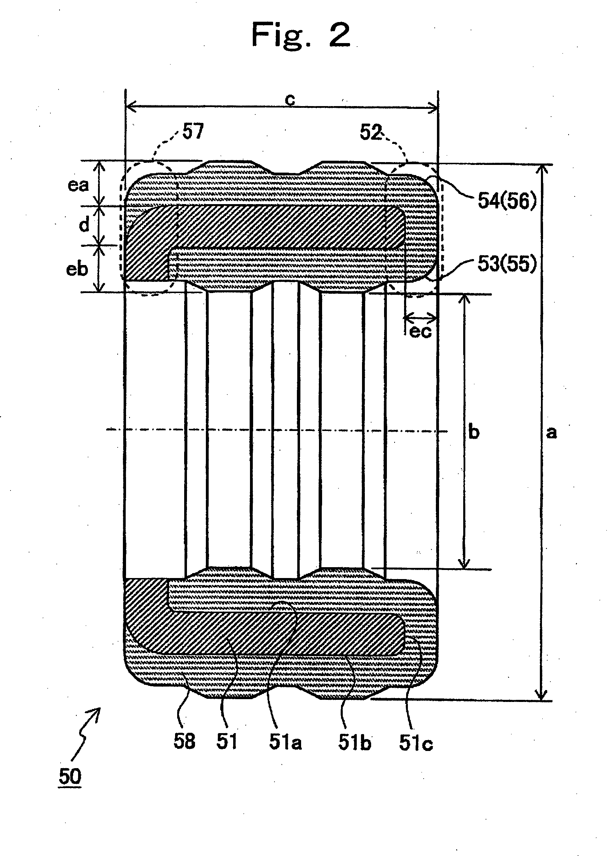

   Fig. 2 is a cross sectional view showing whole structure of a gasket according to the claimed invention.
[Fig. 3]

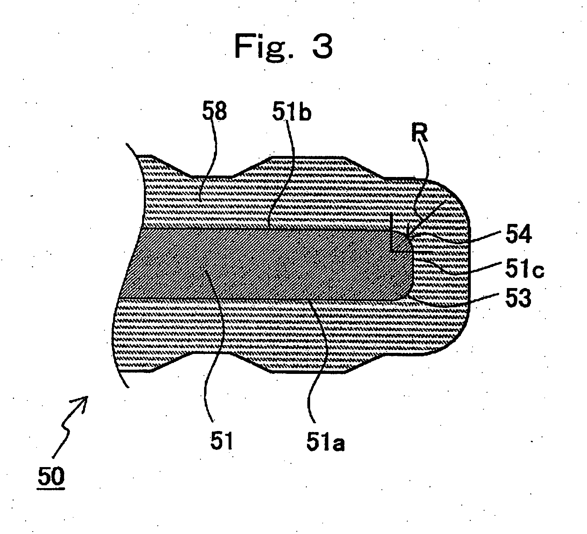

   Fig. 3 is an enlarged view of an inboard end portion of the gasket shown in Fig 2 showing a specific embodiment of a metal tube.
[Fig. 4]

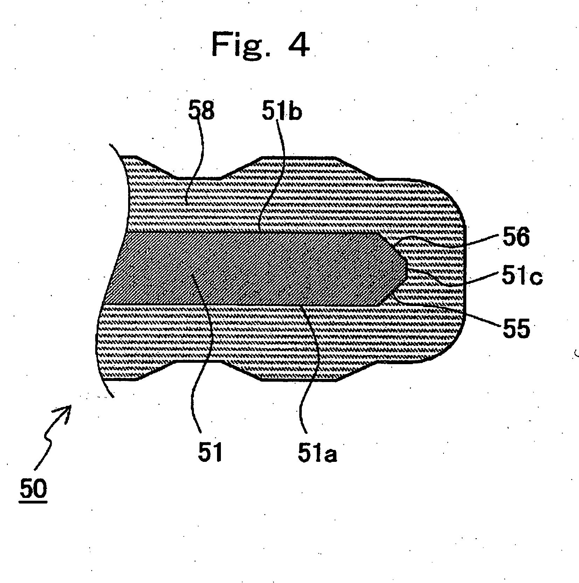

   Fig. 4 is an enlarged view of an inboard end portion of the gasket shown in Fig 2 showing specific embodiment of the metal tube, not part of the claimed invention
[Fig. 5A]

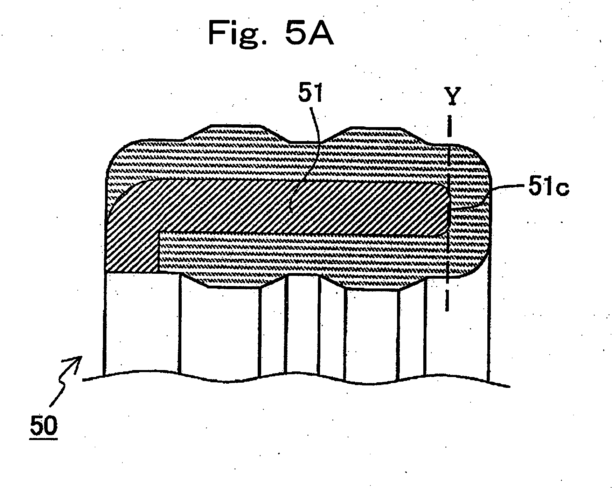

   Fig. 5A is a first diagram for explaining an observation method of foaming breakage at a verification experiment of breakage of foaming of a gasket.
[Fig. 5B]

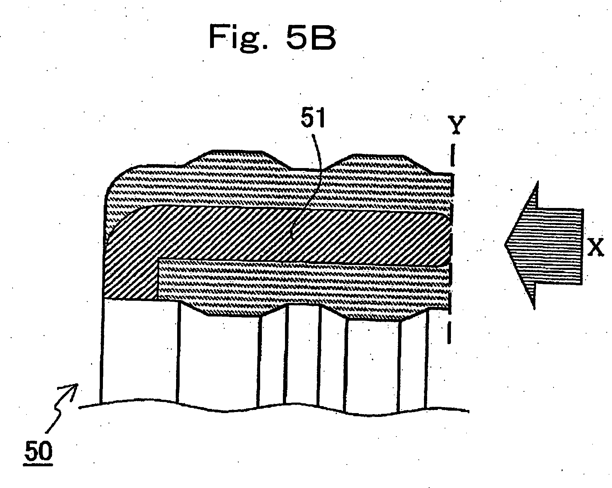

   Fig. 5B is a second diagram for explaining an observation method of foaming breakage at a verification experiment of breakage of foaming of a gasket.
[Fig. 6A]

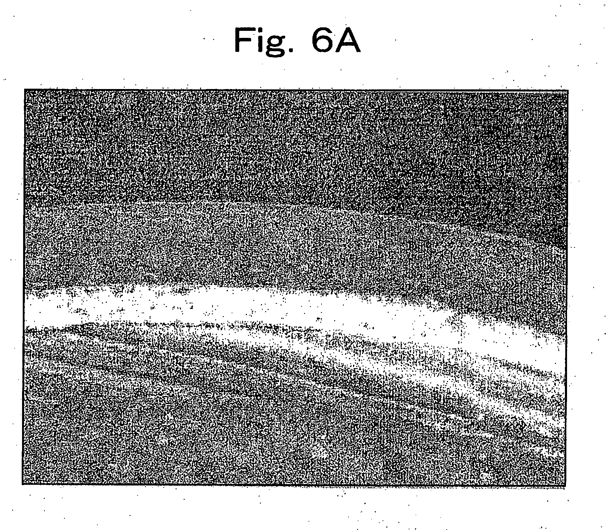

   Fig. 6A is a diagram showing an example of observation image wherein breakage of foaming is not occurred.
[Fig. 6B]

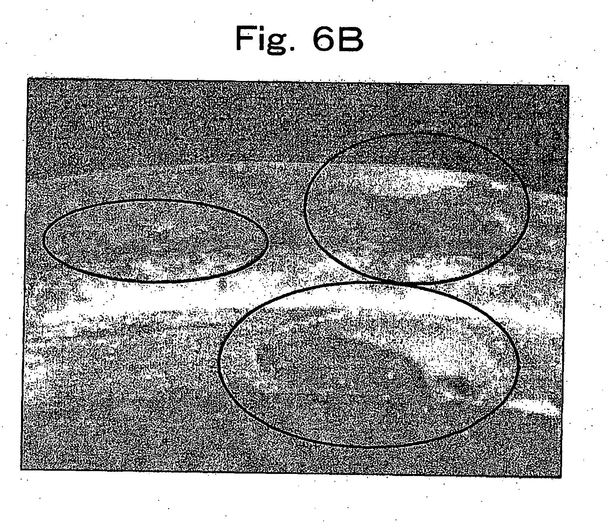

   Fig. 6B is a diagram showing an example of observation image wherein breakage of foaming is occurred.
[Fig. 7]

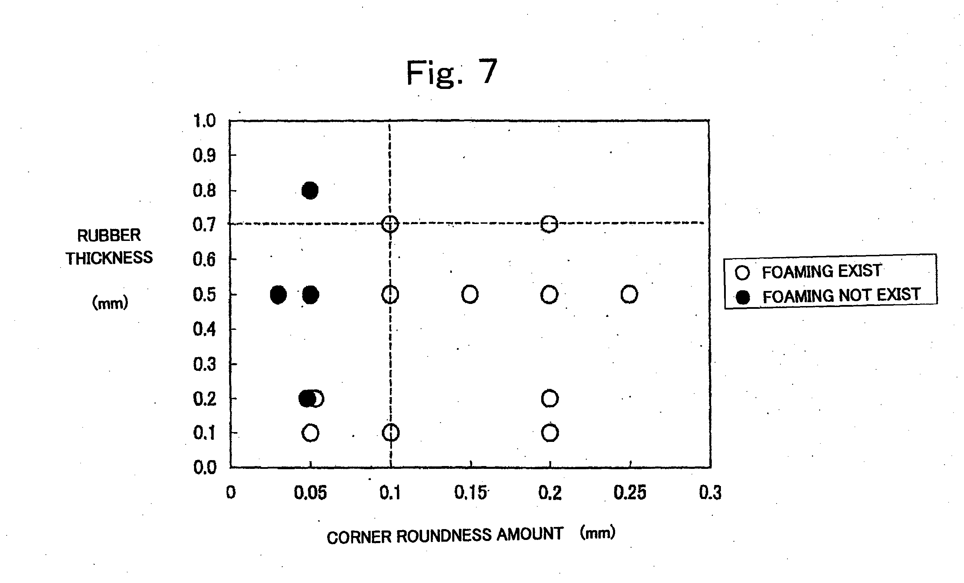

   Fig. 7 is a diagram showing an experimental result for verifying that the breakage of foaming is not occurred and condition thereof at the gasket shown in Fig. 3.
[Fig. 8]

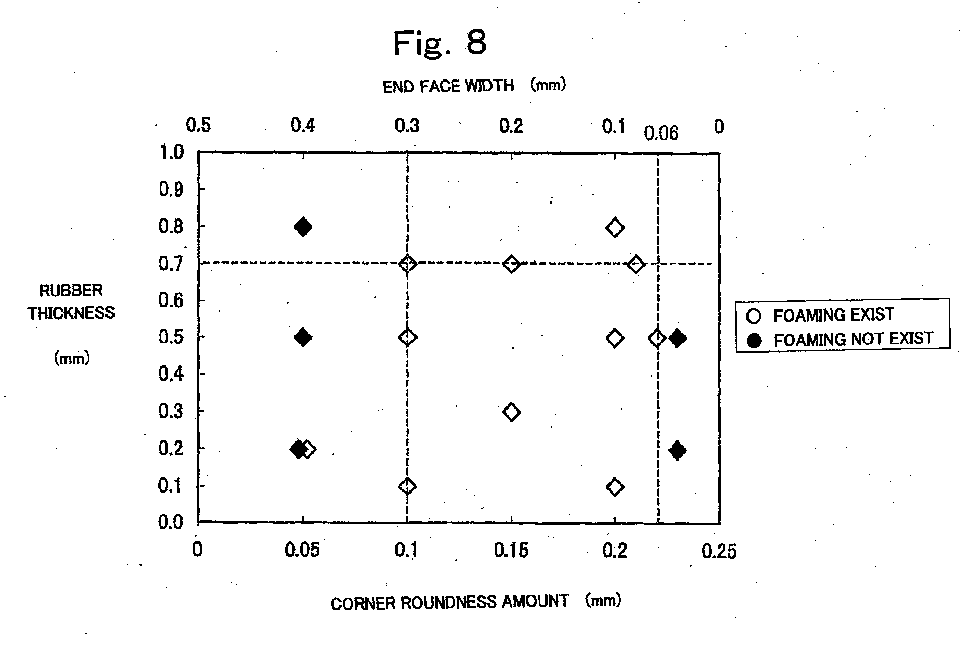

   Fig. 8 is a diagram showing an experimental result for verifying that the breakage of foaming is not occurred and condition thereof at the gasket shown in Fig. 4.
[Fig. 9]

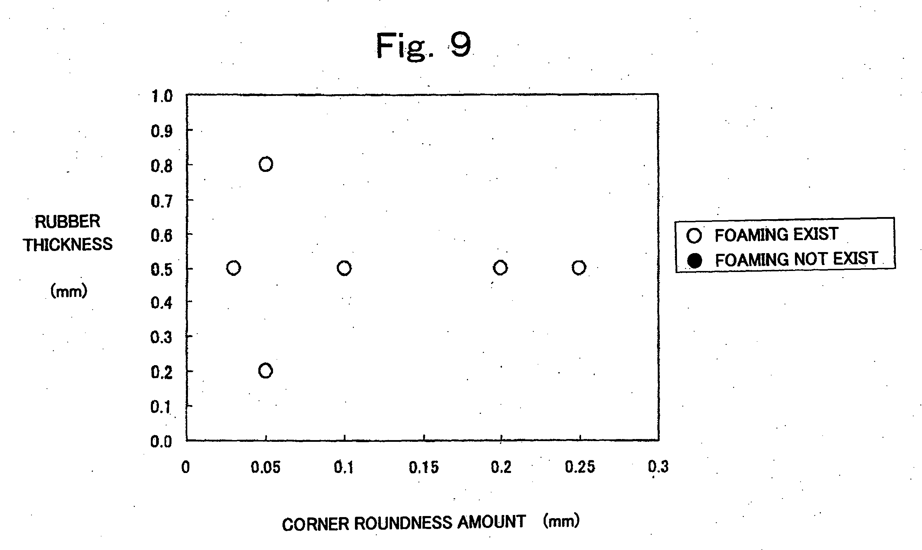

   Fig. 9 is a diagram showing a result of verifying experiment for breakage of foaming at the gasket shown in Fig. 3 in case that seal object is Freon gas (R-134a) for comparison.

### THE PREFERRED EMBODIMENTS OF THE INVENTION

With respect embodiments of the present invention will be specified with reference to Fig. 1 to Fig. 9.

In the present embodiment, it will be specified a sealing device to seal carbon dioxide gas (CO₂) as refrigerant applied to a compressor for an automotive air conditioner wherein a sealing device using a gasket according to the present invention.

Fig. 1 is a schematic cross sectional view showing a constitution of the sealing device.

As shown in Fig. 1, a sealing device 3 is equipped between a housing 1 of a compressor and a shaft 2 which is located so as to communicate an inside (inboard) and an outside (environment) of a compressor with penetrating an axial bore 11 of the housing. The shaft 2 drives a mechanism of the inside of the compressor (inboard) by a driving force from a crank axis of an engine at environment side which is transmitted via an electromagnetic crutch and the like not shown and rotated thereby.

A sealing device 3 comprises a mating ring 30 which is a stationary side sliding ring equipped as a non-rotational status to the housing 1, a seal ring 40 which is a rotational side sliding ring 40 equipped to the shaft 2 side integrally rotates with the shaft 2, and a gasket 50 according to the present invention which is interposed between the mating ring 30 and the housing 1. Also, the sealing device 3 comprises a case 60, a coiled wave spring 70 and an O-ring 81 as a constitution so that the seal ring 40 slides over the shaft 2.

The mating ring 30 and the seal ling 40 are arranged so as to face each other along an axial direction of the shaft 2 to seal the sealed fluid at a sealed sliding face S. Namely, the inboard sealed fluid is sealed so as not to leak or flow to the environment side.

Note that, in Fig. 1, a space P of an outer circumferential side of a right side sealed sliding face S of the housing 1 is an inboard space to which carbon dioxide gas (CO₂) as sealed fluid is congested, and a space A from an inner circumferential side of the sealed sliding face S reaches to a left side of the housing 1 is an environment side (outboard) space.

The mating ring 30 is received at an annular recess portion 12 formed as diameter expansion at an inboard side opening portion of the axial bore 11 of the housing 1. The mating ring 30 is engaged into the annular recess portion 12 with interposing the gasket 50 according to the present invention at an outer circumferential face 30b. An end face of the mating ring 30 at the sealing ring 40 side is formed as a sliding face 30a to which an end face 41a of a sliding notch 41, as a sliding face of the seal ring 40, tightly contacts rotatably.

The seal ring 40 is arranged at the inboard side of the mating ring 30 and is fit to an outer circumferential face of the shaft 2 movably to an axial direction via the O-ring 81. A sliding notch 41 projected to a direction of the mating ring 30 is formed at an end face at the mating ring 30 side of the seal ring 40, an end face 41a of the sliding notch 41 slidably contacts tightly to the sliding face 30a of the mating ring 30.

The seal ring 40 is formed by, for example, carbon sliding material, and the mating ring 30 is formed by rigid sliding material having large Young's modulus with respect to the carbon sliding material (for example, ceramic such as SiC and the like).

The O-ring 81 is equipped to the seal ring 40 with a status received in an O-ring mount recess portion 43 formed on an inner circumferential face of an end portion at a back face side of the seal ring 40 (a face opposite to the mating ring 30).

A spring hold 71 which is a metal plate abuts a back face of the seal ring 40, an inside diameter thereof extends so as to cover a rear of the O-ring mount recess portion 43 of the seal ring 40.

A case 60 composed of a collar shape metal plate is located at a back face side of the spring holder 71.

The case 60 is locked towards the axial direction of the shaft 2 by abutting to a first gap portion 21 of the outer circumferential surface of the shaft 2. The case 60 is composed to engage with a notch 26 portion formed at a part of the first gap portion 21 of the shaft 2, thereby non-movable towards a circumferential direction against the shaft 2, namely, fit with the shaft 2 so as to rotate integrally with the shaft 2 accompanied with rotation of the shaft 2.

The coiled wave spring 70 is interposed between the spring holder 71 and the case 60 with appropriately compressed status to an axial direction, thereby the seal ring 40 is biased to a direction of the mating ring 30 via the spring holder 71.

Also, a plurality of engaging pawl 61 extended to the axial direction are formed with equally space, the pawls engage with a plurality of engaging notch 42 formed as equally spaced similarly at an outer circumferential side of the seal ring 40. Thereby, the seal ring 40 becomes a status movable to the axial direction of the shaft 2, and equipped with the shaft 2 with a status not movable (integrally rotating status) to the circumferential direction of the shaft 2 (rotational direction).

By the constitution like this, an applying force by the coiled wave spring 70 is given to the seal ring 40 with the axial direction of the shaft 2, and the edge face 41a of the sliding notch 41 is compressed with an appropriate surface pressing force to the sliding face 30a of the mating ring 30. Also, the seal ring 40 rotates integrally with the shaft 2 by a rotational torque from the shaft 2 via the case 60.

As a result, accompany with rotation of the shaft 2, the sliding face 30a of the mating ring 30 and the sliding face 41 a at an end of the sliding notch 41 of the seal ring 40 slide with tightly contact status to seal sealed fluid at a contact face (sealing slide face S) of the sliding face 30a of the mating ring 30 and the sliding face 41 a of the seal ring 40.

Note that, as mentioned previously, in the shaft 2, the first gap portion 21 is formed having tapered shape wherein the notch portion 26 are formed appropriately at a position to which the end portion of the case 60 is connected, also, a gap portion (a second gap portion) 22 is formed at a position corresponding to an inner circumference of the seal ring 40. The first gap portion 21 and the second gap portion 22 are as a boundary, in the shaft 2, a small diameter portion 23 which through an axis hole 11 of the housing 1 at environmental side with respect to the first gap portion 21 and an inner circumferential side of the mating ring 30 is formed, a middle diameter portion 24 to which a seal ring 40 between the first gap portion 21 and the second gap portion 22 slides over movably towards an axial direction via the O-ring 81 is formed, and a large diameter portion 25 of which an inboard portion with respect to the second portion 22 is formed.

The gasket 50 is interposed between an inner circumferential face of an annular recess portion 12 of the housing 1 and the mating ring 30, the gasket 50 is a cylindrical shape member to prevent sealed fluid leaks from a space between the housing 1 and the mating ring 30 to environmental side.
Constitution of the gasket is shown in Fig. 2 to Fig. 4.
Fig. 2 is a cross sectional view showing whole constitution of the gasket 50, Fig. 3 and Fig. 4 are enlarged views of an end portion of inboard side of the gasket 50 respectively, and showing two embodiments of the gasket 50.

As shown in Fig. 2, the gasket 50 comprises a metal ring 51 which is a thin plate ring member made of metal and a rubber portion 58 which is a thin layer made of rubber member formed on about whole area of a circumferential face thereof. Namely, it has a constitution that the metal ring 51 is covered by the rubber portion 58. The rubber portion 58 covers continuously an inner circumferential face 51a and an outer circumferential face 51b and an end face 51c of inboard side (a side exposed to the sealed fluid) of the metal ring 51.

Thicknesses of the rubber portion ea and eb are set in response to a seal face pressure and a seal property. A rubber portion thickness is preferably less than 0.7 mm considering gas permeability and the like. Note that, a lower limit may be thinner as possibly upon considering its procession.

Also, an environmental side of an end portion 57 of the gasket 50 (an end portion contacts to a bottom face of the annular recess portion 12 of the housing 1) is formed as having bottom shape by the metal ring 51 is bent to the inner diameter direction. Also, the metal ring 51 of the bent portion is exposed at an inner diameter corner portion of the gasket 50.

In this manner, at the bent portion of the metal ring 51, the metal ring 51 contacts with a wall face of the housing 1 directly, heat radiation of the gasket 50 to the housing becomes be available efficiently.

R-Chamfering is made to a corner portion of an inboard end portion 52 of the metal ring 51 of the gasket 50 as shown in Fig. 3. Namely, a corner portion formed by the end face 51 and the inner circumferential face 51a and a corner portion formed by the end face 51c and the outer circumferential face 51b are formed as curved surfaces 53 and 54 having a round radius "R" respectively. Thereby, at the inboard end portion 52 of the gasket 50, the metal ring 51 is constituted that two faces does not have such as a right angle or a shape angle so-called "angular".

Note that, the round radius "R" of the curved surfaces 53 and 54 are preferably that low limits thereof are constituted as 0.1 mm not so as to constitute an angle substantially. Also, although an upper limit of the round radius "R" is not particularly limited, it is limited by a thickness of the metal ring 51. In case that the curved surface 53 and the curved surface 54 are formed as a same round radius "R", the upper limit of the round radius "R" is 1/2 of thickness of the metal ring 51.

In an embodiment not part of the claimed invention , the inboard end portion 52 of the metal ring 51 of the gasket 50 may be formed that a corner portion is corner chamfered shown in Fig. 4. Namely, a corner portion formed by the end face 51c and the inner circumferential face 51a, and a corner portion formed by the end face 51c and the outer circumferential face 51b are chambered as angled by planes 55 and 56 having angle 45° with each faces respectively. Even by this shape, at the inboard end portion 52 of the gasket 50, the metal ring 51 is constituted that two faces does not have such as a right angle or a shape angle so-called "angular", functions and effects similar with that an angle portion is constituted as a curved surface.

Note that, widths of the C-chamfered face 55 and 56 is preferably their lower limit is 0.1 mm not so as to constitute an angle substantially. Also, the end face 51 of the metal ring 41 remained as a result of the C-chamfered is preferably remains a width more than 0.06 mm not so as to constitute an angle substantially as similar.

Note that, in the present embodiment, in the gasket having any shape shown in Fig. 3 and Fig. 4, as shown in Fig. 2, an outer diameter a of the gasket is 25.6mm, an inner diameter b is 21mm, a width c of the gasket 50 is 5.2mm. Also, a thickness d of the metal ring 51 is 0.6mm, the thicknesses ea and eb of the rubber portion 58 is less than 0.9 mm at the end portion of the metal ring 51.

Also, in the present embodiment, the metal ring 51 is formed by carbon steel, it may be formed by material having large heat conductivity such as cold rolled steel, copper alloy, aluminum alloy and the like.

Also, it is preferable that material of the rubber member 58 is heat resistant rubber material. For example, FKM (fluoro rubber), CM (chloroprene rubber), H-NBR (hydrogenated nitrile rubber), II (butyl rubber), EPDM (ethylene propylene rubber) and the like are suitable.

Here, with respect to foam is not occurred at the rubber portion 58 of the gasket 50 in case that that the gasket is formed according to the metal ring 51 of the inboard end portion 52 of the gasket 50 is processed as such shape, verification results (experimental results) are shown in Fig. 5A to Fig. 8.

The experiment is performed by that a single body of the gasket which is an object of the verification is sintered in a liquefied carbon gas during of 25°C environment during 24 hours, then, heated in a furnace of 150°C during one hour, and exposing environment similar with an actual usage environment. When heating is finished, as shown in Fig. 5A, the gasket is cut at a position of the inboard end face 51c of the metal ring 51, namely at a position Y shown in the drawing. Then, the cutting plane is observed from a direction X of Fig. 5B as to whether foaming (crack) is occurred.

In Fig. 6A and Fig. 6B, examples are shown wherein the breakage of foaming is there and the breakage of foaming is not there. Fig. 6A is a picture showing the breakage of foaming is not occurred at the gasket 50, Fig. 6B is a picture showing the breakage of foaming is not occurred.

In Fig. 6B, it is clearly available to observe in case there is the breakage of foaming, as enclosed by dotted line.

In the gasket 50 wherein the inboard end portion 52 of the metal ring 51 is R chamfered as shown in Fig. 3 and in the gasket 50 wherein the inboard end portion 52 of the metal ring is C chamfered as shown in Fig. 4, the above mentioned experiments and observations have been repeated with changing conditions.

The results are shown in Fig. 7 and Fig. 8.

Fig. 7 is a diagram showing as to whether the foaming exists or not at the rubber portion 58 of an end portion of the metal ring 51 in the gasket 50 having shape wherein the inboard end portion 52 of the metal ring 51 is R chamfered as shown in Fig. 3. In Fig. 7, a lateral axis shows a round radius of a curve of R-chamfering, a vertical axis shows a thickness of the rubber portion 58. In the drawing, white circular marks plotting are a condition wherein the foaming was not found and black circular marks plotting are a condition wherein the foaming was found.

Note that, a thickness of the metal ring 51 is within 0.5 mm in any cases, an inner or an outer curved face 53 and 54 are formed by the same "R" radius.

As it is clear from Fig. 7, although in case that the radius "R" of the R-chamfering is 0.05mm, the foaming is confirmed at the rubber portion 58 more than half number of samples, the foaming does not occur under the condition that the radius "R" is more than 0.1mm, despite the thickness of the rubber portion 58.

Therefore, despite other conditions such as the thickness of the rubber portion 58, the foaming of the rubber portion 58 and the breakage of foaming of the rubber portion 58 can be prevented by chamfering procession of the inboard end portion 52 of the metal ring 51 with a curved surface having more than the radius R=0.1mm.

Also, Fig. 8 is a diagram showing shapes of end portion of the metal ring 51 and whether the foaming exists or not at the rubber portion 58 in the gasket 50 having shape wherein the inboard end portion 52 of the metal ring 51 is C chamfered as shown in Fig. 4. In Fig. 8, a lateral axis shows a width of C-chamfering, a vertical axis shows a thickness of the rubber portion 58. Also, an upper portion of Fig. 8, a remaining width of the end face 51 of the metal ring 51 defied by chamfering width. In the drawing, white circular marks plotting are a condition wherein the foaming was not found and black circular marks plotting are a condition wherein the foaming was found.

Note that, a thickness of the metal ring 51 is within 0.5 mm in any cases, inner and outer C-chamfering portions 55 and 56 are formed by the same C-chamfering width.

As it is clear from Fig. 8, although in case that the chamfering width of the C-chamfering is 0.05mm, the foaming is confirmed at the rubber portion 58 more than half number of samples, the foaming does not occur under the condition that the chamfering width is more than 0.1mm, despite the thickness of the rubber portion 58.

On the other hand, the foaming is not confirmed in case that a width of the remaining end face 51c is until 0.06 mm (corresponding to 0.3 mm of the chamfering width), and is confirmed if it is below. It has been confirmed that due to this portion becomes a "corner" substantially, if the remaining end face 51c is too narrow, substantially.

Therefore, when the C-chamfering, despite other conditions such as the thickness of the rubber portion 58, the foaming of the rubber portion 58 and the breakage of foaming of the rubber portion 58 can be prevented by the C-chamfering so that the a chamfering width of a shape of the inboard end portion 51c of the metal ring 51 is more than 0.1 mm with the end face 51c of the metal ring remains more than 0.06mm.

Next, for comparing, a result for performing a similar experiment as to whether the breakage of foaming exist or not when Freon gas (R-134a) is used as an object medium of sealing (sealed fluid). The result is shown in Fig. 9.

Fig. 9 is a diagram showing a result of presence or absence of foaming (crack) by observing a single gasket 50 wherein the R-chamfering is performed to the inboard end portion 52 of the metal ring 51 as shown in Fig. 3, sintering into a liquefied Freon gas having 25°environment during 24 hours, then heated in a furnace of 150°C during one hour, the gasket is cut at a position of the inboard end face 51c of the metal ring 51. In the drawing, white circular marks plotting are a condition wherein the foaming was not found and black circular marks plotting are a condition wherein the foaming was found.

Note that, a thickness of the metal ring 51 is within 0.5 mm in any cases, inner and outer C-chamfering portions 55 and 56 are formed by the same C-chamfering width.

As shown in Fig. 9, when the sealing object is Freon gas (R-134a) in any shape of the gasket 50, the breakage of foaming is not occurred at the rubber portion 58. As it is clear by comparing with Fig. 7, the breakage of foaming at the gasket 50 is not occurred under any condition including in case that the radius "R" of the R-chamfering is 0.05 mm in which the breakage of foaming was confirmed when the sealing object is carbon dioxide gas (CO₂).

In this manner, according to the sealing object is carbon dioxide gas (CO₂), it has been confirmed clearly that the foaming and the breakage of foaming of the rubber portion 58 of the gasket 50 are occurred which were not occurred when the sealing object is Freon gas (R-134a). Then, in case that the sealing object is carbon dioxide gas (CO₂), by making a shape of the gasket 50 as the present invention, it is clear that the foaming of the rubber portion 58 can be prevented as well as the breakage of foaming of the rubber potion 58 can be prevented too. Namely, it is confirmed clearly that the gasket 51 having the metal ring 51 defined be the present invention is quite effective when sealing carbon dioxide gas (CO₂).

As explained above, according to the sealing device 3 of the present embodiment, since a shape of the inboard end portion 52 of the metal ring 51 of the gasket 50 is formed as R chamfered at corner portions shown in Fig. 3 or C chamfered at corner portions shown in Fig. 4, the angled portions are not substantially existed at the end portion of the metal ring 51. As a result, in a conventional gasket, concentrated foaming occurred in a rubber portion at corner portions of the end portion of the metal ring can be prevented.

Also, because the rubber portion 58 can be connected with the metal ring 51 even at the end portion of the metal ring 51, a connecting force of the metal ring 51 and the rubber portion 58 may be uniformed at whole body of the gasket 50. As a result, the breakage of foaming of the rubber portion 58 at a boundary face of the metal ring 51 and the rubber portion 58 can be prevented.

Note that, the above mentioned embodiments are described for easily understanding of the present invention, and it does not limit the present invention in anyway, beyond the scope of the claims.

### INDUSTRIAL APPLICABILITY

A gasket of the present invention is a sealing device to seal wherein carbon dioxide gas (CO₂) is sealed fluid, and is useful by applying a sealing device used for, e.g., a compressor of an automotive air conditioner. Also, a gasket of the present invention is favorable to use other arbitral sealing device, for example, an oil seal and the like.

## Claims

1. A gasket with a cylindrical shape used for preventing sealed fluid from leaking from a space between a housing (1) and a stationary side seal heating ring (30) to environmental side, said housing (1) comprising an inboard space (P) to which said sealed fluid is congested, said stationary side seal maxing ring (30) being received in an annular recess portion (12) formed at an inboard side opening portion of said housing (1), said gasket (50) being arranged in use, between an inner circumferential face of said annular recess portion (12) and an outer circumferential face (30b) of said stationary side seal ring (30), said gasket (50) comprising;
a cylindrical metal ring (51), and
a rubber layer (58) continuously covering an inner circumferential face (51a), an outer circumferential face (51b), and an end face (51c) of said inboard side of said cylindrical metal ring (51),
wherein
said metal ring (51) is bent to said inner diameter (d) direction in an end position (57) on said environmental side of said gasket (50) to be formed as having bottom shape, and said bent portion, in use, contacts to a bottom face of said annular recess portion (12) of said housing (1) and is exposed at an inner diameter corner portion of said gasket (50), **characterised in that** the corner portion (53) formed by said end face (51c) on said inboard side and said inner circumferential face (51a), and the corner portion (54) formed by said end face (51 c) on said inboards side and said outer circumferential face (51b) are respectively round chamfered so that a round radius "R" of a curved surface (53, 54) becomes R=0.1 mm or more.

2. A gasket with a cylindrical shape according to claim 1 **characterised in that** the width of said end face (51c) is 0.06 mm or more.

3. The gasket according to claims 1 or 2 **characterised in that** the thickness of said rubber layer (58) is 0.7 mm or less.

## Patentansprüche

1. Dichtung mit einer zylindrischen Form, die dazu dient zu verhindern, dass eingeschlossenes Fluid aus einem Raum zwischen einem Gehäuse (1) und einem ortsfesten seitlichen Dichtungspassring (30) zur Umgebungsseite hin austritt, wobei das Gehäuse (1) einen fahrzeuginnenseitigen Raum (P) umfasst, in dem das eingeschlossene Fluid gestaut wird, wobei der ortsfeste seitliche Dichtungspassring (30) in einem ringförmigen Aussparungsabschnitt (12) aufgenommen ist, der in einem fahrzeuginnenseitigen seitlichen Öffnungsabschnitt des Gehäuses (1) ausgebildet ist, wobei die Dichtung (50) während des Gebrauchs zwischen einer Innenumfangsfläche des ringförmigen Aussparungsabschnitts (12) und einer Außenumfangsfläche (30b) des ortsfesten seitlichen Dichtungsrings (30) angeordnet ist, wobei die Dichtung (50) Folgendes umfasst:
einen zylindrischen Metallring (51), und
eine Gummischicht (58), die eine Innenumfangsfläche (51a), eine Außenumfangsfläche (51b) und eine Endfläche (51c) der fahrzeuginnenseitigen Seite des zylindrischen Metallrings (51) durchgehend bedeckt,
wobei
der Metallring (51) in der Richtung des Innendurchmessers (d) in einer Endposition (57) auf der Umgebungsseite der Dichtung (50) gebogen ist, um mit einer Bodenform ausgebildet zu werden, und der gebogene Abschnitt während des Gebrauchs eine Unterseite des ringförmigen Aussparungsabschnitts (12) des Gehäuses (1) berührt und an einem Innendurchmesser-Eckabschnitt der Dichtung (50) frei liegt, und **dadurch gekennzeichnet, dass** der Eckabschnitt (53), der durch die Endfläche (51c) auf der fahrzeuginnenseitigen Seite und die Innenumfangsfläche (51a) gebildet wird, und der Eckabschnitt (54), der durch die Endfläche (51c) auf der fahrzeuginnenseitigen Seite und die Außenumfangsfläche (51b) gebildet wird, jeweils rund gefast sind, so dass ein runder Radius "R" einer gekrümmten Fläche (53, 54) zu R = 0,1 mm oder mehr wird.

2. Dichtung mit einer zylindrischen Form nach Anspruch 1, **dadurch gekennzeichnet, dass** eine Breite der Endfläche (51c) 0,06 mm oder mehr beträgt.

3. Dichtung nach Anspruch 1 oder 2, **dadurch gekennzeichnet, dass** die Dicke der Gummischicht (58) 0,7 mm oder weniger beträgt.

## Revendications

1. Joint d'étanchéité de forme cylindrique, utilisé pour éviter qu'un fluide hermétiquement enfermé ne fuie à partir d'un espace compris entre un logement (1) et une bague d'accouplement d'étanchéité côté fixe (30) vers un côté environnement, ledit logement (1) comprenant un espace intérieur (P) dans lequel ledit fluide hermétiquement enfermé est confiné, ladite bague d'accouplement d'étanchéité côté fixe (30) étant logée dans une partie formant évidement annulaire (12), ménagée dans une partie formant ouverture côté intérieur dudit logement (1), ledit joint d'étanchéité (50) étant disposé en cours d'utilisation entre une face circonférentielle intérieure de ladite partie formant évidement annulaire (12) et une face circonférentielle extérieure (30b) de ladite bague d'étanchéité côté fixe (30), ledit joint
d'étanchéité (50) comprenant :
une bague métallique cylindrique (51), et
une couche de caoutchouc (58) recouvrant de façon continue une face circonférentielle intérieure (51a), une face circonférentielle extérieure (51b) et une face d'extrémité (51c) dudit côté intérieur de ladite bague métallique cylindrique (51),
dans lequel :
ladite bague métallique (51) est pliée dans la direction dudit diamètre intérieur (d) à une position d'extrémité (57) dudit côté environnement dudit joint d'étanchéité (50) pour être formée de manière à présenter une forme de fond, et ladite partie pliée, en cours d'utilisation, est en contact avec une face inférieure de ladite partie formant évidement annulaire (12) dudit logement (1) et est exposée à une partie formant coin du diamètre intérieur dudit joint d'étanchéité (50), et **caractérisé en ce que** la partie formant coin (53) formée par ladite face d'extrémité (51c) dudit côté intérieur et ladite face circonférentielle intérieure (51a), ainsi que la partie formant coin (54) formée par ladite face d'extrémité (51c) dudit côté intérieur et ladite face circonférentielle extérieure (51b) présentent respectivement un chanfrein arrondi, de manière qu'un rayon d'arrondi « R » d'une surface courbe (53, 54) devienne R = 0,1 mm ou plus.

2. Joint d'étanchéité de forme cylindrique selon la revendication 1, **caractérisé en ce que** la largeur de ladite face d'extrémité (51c) est de 0,06 mm ou plus.

3. Joint d'étanchéité selon la revendication 1 ou 2, **caractérisé en ce que** l'épaisseur de ladite couche de caoutchouc (58) est de 0,7 mm ou moins.
